(19)

**Europäisches Patentamt**

**European Patent Office**

**Office européen des brevets**

(11) **EP 4 625 328 A1**

(12) **EUROPEAN PATENT APPLICATION**

(43) Date of publication:
01.10.2025 Bulletin 2025/40

(21) Application number: 24166724.5

(22) Date of filing: 27.03.2024

(51) International Patent Classification (IPC):
*G06T 11/00* *(2006.01)*

(52) Cooperative Patent Classification (CPC):
**G06T 11/008;** G06T 2211/412

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Koninklijke Philips N.V.**
**5656 AG Eindhoven (NL)**

(72) Inventors:
- **TORBJØRN, Vik**
  **Eindhoven (NL)**
- **SCHAEFER, Dirk**
  **Eindhoven (NL)**
- **SIMON, Matthias**
  **5656AG Eindhoven (NL)**

(74) Representative: **Philips Intellectual Property & Standards**
**High Tech Campus 52**
**5656 AG Eindhoven (NL)**

(54) **HEAD MOTION CORRECTION FOR CONE-BEAM COMPUTED TOMOGRAPHY (CBCT) RECONSTRUCTION USING BONE SEGMENTATION FROM PRIOR 3D IMAGING**

(57) An image processing system and related method. The image processing system (ARS) may comprise an input interface (IN) for receiving a reconstructed current target image (V) of an object of interest (OI) subjectable to motion. A motion corrector (MC) corrects for motion artifact in the target image causable by said motion, based on information as per a reconstructed reference image (V0) of the object. The said reference image (V0) may include motion artifact, if any, to a lesser extent than the current target image (V). The system allows for improved, that is faster and/or more robust, reduction of motion artifacts in the current target image.

FIG. 3

**Description**

FIELD OF THE INVENTION

The invention relates to a system of image processing, to an imaging arrangement using such as system, to a related method, to a computer program element, and to a computer readable medium.

BACKGROUND OF THE INVENTION

Patient head motion correction is used for example in cone-beam CT C-arm tomographic reconstructions. Projection data acquisition in such fixed or mobile C-arm tomography imager, in particular of the cone beam type, are much slower than diagnostic CT. It may take just shy of 10s to collect the projection data. This makes imaging with such C-arm systems prone to patient motion artifacts.

More specifically, in order to image an object, such as the head of a patient in 3D, 2D X-ray projections from at least 180 degrees of rotation needs to be acquired. If the object moves during acquisitions, the reconstructed volume is distorted and contains artifacts such as streaks, blurring, warped, and/or double structures may appear. In case the motion is known, it can be corrected for in the reconstruction algorithm such that artifacts are reduced or entirely removed. When the motion is not known, it can be estimated with methods such described by Nicole M Cancelliere et al in "Motion artifact correction for cone beam CT stroke imaging: a prospective series" published in J. NeuroIntervent. Surg, vol, ppl-6, 2022. This and similar methods may use iterative reconstruction approaches. However, convergence of such or similar methods may sometimes be of concerns. The corrected imagery so obtained may not have the required image quality or it takes in inordinately long time for convergence to set in.

For many use-cases, a prior tomographic image of the patient is available. eg, for interventions, a pre-operative, planning CT may be acquired, or the patient has been scanned before for other reasons.

SUMMARY OF THE INVENTION

There may therefore be a need for improved motion artifact reduction, in particular in tomographic imaging.

An object of the present invention is achieved by the subject matter of the independent claims where further embodiments are incorporated in the dependent claims. It should be noted that the following described aspect of the invention equally applies to the imaging arrangement, to the related method, to the computer program element and to the computer readable medium.

According to a first aspect of the invention there is provided an image processing system, comprising:-

> input interface for receiving a reconstructed current target image of an object of interest subjectable to motion,
> a motion corrector configured to correct for motion artifact in the target image causable by said motion, based on information as per a reconstructed reference image of the object, the said reference image including motion artifact, if any, to a lesser extent than the current target image.

The reference image represents, because it is less affect by motion artifacts, can provide a reliable and robust "guidance" on how to correct (reduce) motion artifacts in the current target image. More reliable, robust and responsive motion artifact correction/reduction in respect of the target image may be obtained. Just like the current image, the reference image is also a 3D image.

The modality/imager(s) used to obtain the target and reference image are of the tomographic type, and the current target image are obtained by a tomographic reconstruction algorithm from respective projection data acquired the respective (or same) imager.

In embodiments, the said information is based on a segmentation of the reference image for a surrogate structure or for the object of interest.

The surrogate structure may not be/include or comprised in/by the object of interest, or region of interest: it is merely sufficient for a motion of surrogate to the relatable to in a predefined manner to the motion experienceable by object of interest/ROI, Thus, the motion of surrogate may be used herein instead of object of interest's/ROI's motion to correct for same in respect of the object of interest' s/RO I.

In embodiments, the said information is further based on such segmentation of the current target image.

In embodiments, the said information is based on a spatial registration of the two images, the current target image and/or the reference image, in respect of the segmentations for the surrogate structure or of the object of interest.

In embodiments, the surrogate structure or the object of interest includes bone tissue.

In embodiments, the surrogate structure or of the object of interest includes at least a part of a skull or a jaw (eg, mandible).

In embodiments, the target image is obtainable by an interventional tomographic imaging apparatus.

In embodiments, the reference image is obtained by a further or the same imaging apparatus.

In embodiments, the interventional imaging apparatus and/or the further imaging apparatus is/are X-ray based.

In embodiments, the interventional imaging apparatus is a cone-beam C-arm tomographic scanner, and/or wherein the further imaging apparatus is a computed tomography scanner, CT or a cone-beam C-arm tomographic scanner.

In embodiments, the correcting for the motion artifact by the motion corrector includes computing a corrected image in a further reconstruction, based on projection data for a different acquisition trajectory than the one used to acquire the projection data from which reference image is reconstructable.

Thus, the said information or comparison is used/accounted for in a further (second pass) reconstruction to obtain a motion corrected version of the current image.

In embodiments, the different acquisition trajectory is based on comparing the projection data for the current image, with projection data obtainable by forward projection of the segmented reference image or of a segmented current image.

In another aspect there is provided an imaging arrangement, including any one or more of: i) the system of any one of the preceding claims, ii) a reconstructor, iii) a display device on which any or more of the a) current image, b) the reference image and c) the artifact corrected image is displayable, iv) a segmentor, v) an image registration component, vi) one or more imaging apparatus for obtaining at least one of the current image , and the reference image.

In another aspect there is provided a method of image processing system, comprising:

receiving a reconstructed current target image of an object of interest subjectable to motion, and
correcting for motion artifact in the target image causable by said motion, based on information as per a reconstructed reference image of the object, the said reference image including motion artifact, if any, to a lesser extent than the current target image.

In another aspect there is provided a computer program element, which, when being executed by at least one computing system, is adapted to cause the computing system to perform the method.

In another aspect there is provided at least one computer readable medium having stored thereon the program element.

Broadly, the image processing system which may be also referred to herein as an (in-image motion)artifact reduction system, may for example be configured for patient head motion correction (PHMC) for example, but other uses such as in limb imaging or spinal cord imaging or others still are also envisaged herein.

The proposed motion artifact correction setup address the following shortcomings in current approaches. For example, current approaches in PHMC may be considered to be too slow in practice to be used in every (or at least multiple) tomographic reconstruction. Furthermore, in some existing cases - typically with severe motion artifacts - some motion artifact correction approaches, such as in PHMC, may not converge at all, or not enough, so that even with such current correction facility in place, the imaging result may not be satisfactory. In-image motion artifacts like streaks, blur, double structures, and others remain, so that in the worst case, a new acquisition must be performed.

The reason for the faster and/or more robust convergence behavior of the proposed system is at least as follows: some existing motion correction approaches, such as in PHMC, may rely on forward projection. The proposed reference image-based approach allows the said better convergence behavior, since in the proposed approach gradients in the forward projection of the reference image are at least as well defined and pronounced ("sharp"), as in the measured projection data acquired for the current image. In contrast, in existing approaches, motion-corrupted edges are blurry in 3D and yield blurry 2D gradients in the forward projection.

In addition, in current systems, only when a first reconstruction without motion correction has been performed and the result is unsatisfactory, can user request a new reconstruction with PHMC. This hampers the workflow, slows matters down even further, and this may add to user frustration. To be sure, the reference image (e.g. from an earlier CT) is already recorded and stored before the current imaging procedure, thus is not generally part of the workflow arrangement proposed herein. The proposed system and method may improve both of these shortcomings. Thus, the proposed system and method increases imaging speed, and is able to cope with a broader range of motion artifacts that can be successfully corrected - if a segmented 3D reference image, such as a bone segmentation, is available.

In more detail, the proposed approach may be said to rely at least in parts on the insight that a (non-linear) bone segmentation of the reconstructed volume can be used to align the acquired projections with computed forward projection to estimate the motion. In short, the main components of the method may be summarized by having a motion correction iteration that may include (1) motion estimation, (2) reconstruction with motion corrections applied to acquisition trajectory, and (3) optional assessment of image quality.

Using a segmentation, such as of bone or of other salient structures, in this loop has been found to be useful for such an algorithm to converge. Furthermore, it was found that such or similar algorithms converge faster, and more robustly, as they are able to cope with a wider range of motion artifact severities, when the (eg, bone) segmentation is closer to the true bone segmentation of the non-distorted object of interest.

For many use-cases, a 3D reference image, such as CT image, of the patient to be imaged is available as reference image for the proposed use. E.g., for interventions, a pre-operative, planning CT may be acquired, or the patient has been scanned before for other reasons.

It is proposed herein to use such a 3D reference image/data and to make the segmentation in the current image better approximate the true such segmentation as per the reference image. This "fitting operation" may result in the said information, which may include a motion model, such as a modified acquisition trajectory, which can then be used to reconstruct the target image using the acquired projection data in the further ($2^{nd}$ pass) reconstruction.

In addition, as an option, the final reconstruction may be aligned with the reference 3D image (e.g. pre-op CT) for easier visual comparison. Both may be displayed in such alignment.

The reference 3D image may be available from an image storage such as a PACS (picture archiving and communication system), or the patient makes this available such as on a storage medium which he can allow to be accessed for use in the above system and method. However, the reference image may also be obtained after obtaining the target image to be corrected, e.g. if a second scan during the same clinical procedure contains less motion artifacts for whatever reason. In general, the reference image is obtained in manner to ensure, or at least make more likely, that at least the object of interest, or the surrogate structure, is compromised, if at all, less than in the target image. This can be done by using faster imaging equipment, faster protocols, patient sedation, etc. Whether a 3D image data set can serve as the reference image intended herein can be established upfront by using image value-based measurement metrics, such as entropy or other statistical measure(s).

"*user*" relates to a person, such as medical personnel or other, operating the imaging apparatus or overseeing the imaging procedure. In other words, the user is in general not the patient.

"*object of interest*" is used herein in the general sense to include animate "objects" such as a human or animal patient, or anatomic parts thereof, but also includes inanimate objects such as an item of baggage in security checks or a product in non-destructive testing. However, the proposed system will be discussed herein with main reference to the medical field, so we will be referring to the "object" as "the patient" or a part of the patient, such as an anatomy or organ, or group of anatomies or organs of the patient. In some cases the object of interest may be also referred to as "region of interest" (ROI).

"*surrogate structure*" may or may not be the "*object of interest*", or may or may not be part of the object of interest, as the case may be. *Object of interest*" or "region of interest" is the medical purpose of the obtaining the target image in current imaging session of a patient for example. The surrogate structure is a structure representative of a certain part of the anatomy that is subject to motion, just like the object of interest. The motion experienced by "*surrogate structure*" may be the same, or may have a predefined, known, or estimatable, relationship with the motion experienced by object of interest. Thus, the motion of surrogate structure may be used instead of the motion of the object of interest, to reduce artifacts in respect of the object of interest. Use of such a surrogate structure may be of interest if the actual object of interest is not easily detectable (eg, segmented for) in the imagery, with unsatisfying contrast, whilst the surrogate structure being easier to detect. The motion experienced by the surrogate structure may then be used to compensate for the actual motion experienced by the object of interest.

## BRIEF DESCRIPTION OF THE DRAWINGS

Exemplary embodiments of the invention will now be described with reference to the following drawings, which, unless stated otherwise, are not to scale, wherein:

Fig. 1 shows a block diagram of a medical imaging arrangement as may be envisaged herein in some embodiments;
Fig. 2 shows a block diagram of components of an artifact reduction system in particular of a motion artifact reduction system;
Fig. 3 shows data processable and generatable by the artifact reduction system proposed herein in embodiments; and
Fig. 4 shows a flow chart of a computer-implemented method of image processing, in particular one for the reduction of motion artifacts.

## DETAILED DESCRIPTION OF EMBODIMENTS

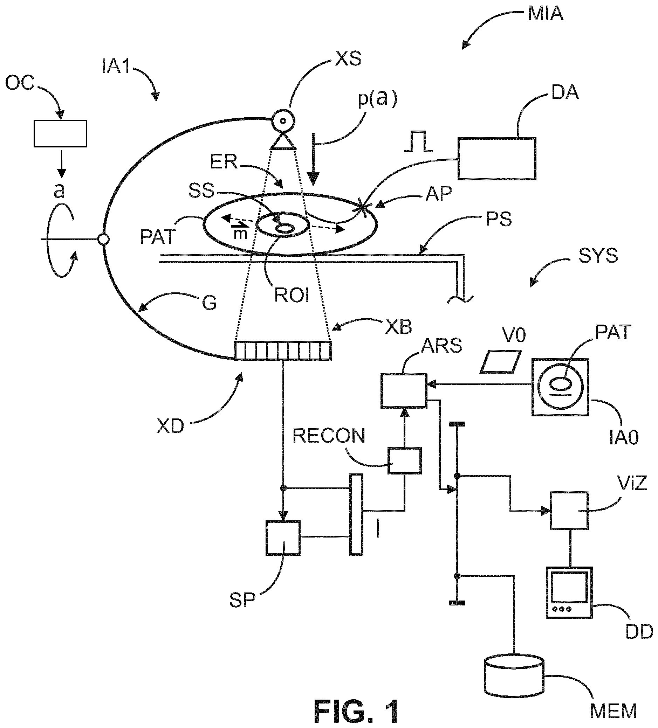

Reference is now made to Fig. 1, which shows a schematic block diagram of a medical imaging arrangement MIA as envisaged herein in some embodiments. The medical imaging arrangement MIA includes an imaging apparatus IA and a computing system SYS. Broadly, the imaging apparatus is operable to acquire measurement data in respect of a patient PAT, in particular of a region of reference ROI or object of interest therein, in an imaging or acquisition process.

EP 4 625 328 A1

The so acquired data can be processed by the computing system SYS into imagery V which can be stored, displayed or otherwise processed as needed. For example, in the medical field, to which the present disclosure is not confined, the imagery *V* may support therapy and/or diagnosis as needed in respect of the patient PAT. The imaging apparatus IA is preferably of the tomographic type. That is, the imagery obtainable is volumetric cross-sectional imagery that can lay bare in a non-invasive manner crucial details of the patient's internal anatomy to thereby suitably inform therapy and/or diagnosis. The X-ray based tomography can be carried out by a C-arm or U-arm X-ray imaging apparatus, configured specifically for interventional procedures such as image guided therapy or diagnosis as needed.

Such an imaging apparatus IA may have a U-shaped or C-shaped gantry G (as shown in Fig. 1). The so, or similarly shaped, gantry G thus defines a recess that allows an interventionalist or medical personnel gaining access to patient PAT during the imaging acquisition in order to perform the necessary intervention. Whilst obtaining still imagery V is not excluded herein, in some instances, there is instead obtained a real-time data stream of video footage $V = Vt$, comprising multiple over-time $t$ sequential frames of images. The stream Vt may be displayed on the display device by a visualizer VIZ during the interventional session as real time footage. However, in the use cases of main interest herein, there are is no such stream, and "V" refers to the given, current image (volume). However, if such a stream of volumes is of interest, each such volume (frame) can be treated as described herein. Thus, consideration of a single given current volume V herein is not limiting to the principles described herein.

Image quality of such imagery V, whether still or as a stream, may be marred by certain image artifacts. Such artifacts may be incurred by certain effects in particular during acquisition. For example, motion artifacts may be caused by the object of interest OI undergoing motion during acquisition. For example, patient PAT may happen to move their head during an ongoing head image acquisition. The acquired data $\lambda$ in such acquisition may be processed by a tomographic image reconstruction RECON component ("reconstructor") of the computing system SYS into the said cross sectional of volumetric imagery. However, the said patient motion may compromise operation of the reconstructor RECON, and this may cause image artifacts in the reconstructed imagery to emerge. Such motion may cause inconstancies between pixel positions in the acquired projection data, and image values (voxel) in a grid that the reconstructor attempts to populate in the tomographic reconstruction. Thus, as a consequence of this (spatial) inconsistencies, such motion may cause image artifacts, such as asymmetric bogus in-image structures, in situations where symmetries are expected, such as in the skull. Another example includes motion streaks, or the emergence of so called "double skull" artifacts. Such image artifacts are structures of the imagery that do not represent actual underlying physical structure that had interacted with the imager's interrogating signal, such as an X-ray beam used in the acquisition. Such (in- )image artifacts are undesirable as they may occlude crucial, real image structure, that does correspond/correlate to real physical structure, such as anatomy/tissue/-medical device in the imager's field of view (FOV), etc. In some cases, such image artifacts may render the imagery V undiagnostic. A re-take may be required which is undesirable, as it causes delay, unnecessary strain on equipment, patient and staff. In X-ray imaging in particular, unnecessary X-ray dosage may be incurred due to such retake, which is undesirable as this is a health hazard.

Broadly, what is envisaged herein, is the computing system to include, or at least being able to interface with, a computational artifact reduction system ARS. Operation of this artifact reduction system ARS will be explained in more detail below. However, it may be remarked initially at this point that the artifact reduction system ARS is in particular configured to correct/reduce, such as to entirely eliminate, motion artifact(s) such as may be incurred in head imaging, or when imaging for other object of interest OI or ROI. Thus, in some embodiments, the artifact reduction system ARS may function as a patient head motion correction (PHMC) facility that helps increase image quality in head imaging. The proposed artifact reduction system ARS has been found herein to be particularly responsive: it can produce artifact-reduced, and thus clinically usable, imagery *V"* quicker than previous approaches, and allows for a better user experience because. This is at least in parts because, with the proposed approach, convergence behavior is faster and more robust, even when dealing with severe motion artifact corruption, as mentioned earlier above in the summary section of this disclosure.

Turing now to X-ray based tomographic imaging in more detail, the acquired data in X-ray imaging is projection data $\lambda$. The projection data is acquired along different spatial directions $\alpha$ in respect of the object of interest. The X-ray projection data, a type of imagery in its own right, represents distribution of X-ray intensities, and these can be computationally combined by the reconstruction component RECON ("reconstructor") which may form part of the computing system SYS. As will be explained in more detail below, the reconstructor RECON may implement a tomographic reconstruction algorithm that processes the projection data $\lambda$ into the said cross sectional volumetric imagery V. The reconstructor may be arranged in software and/or hardware. Reconstruction into a single cross-sectional slice, rather than into a volume formed from multiple such slices, is not excluded herein, but such volumetric reconstruction into a volume(s) is preferred herein. The reconstructed imagery V ("tomographic imagery") will thus be used as a reference to a single slice or a volume. Also, whilst frequent reference herein may be made to a volume V, this does not exclude reference to a single or more such cross-sectional slice images. Reconstruction into such tomographic imagery V allows, in a non-invasive manner, more internal anatomic details to be ascertained, superior to purely projection imaging, that suffers from over-lapping structures for example, a problem which is sidestepped in tomographic (cross-sectional) imaging.

What is proposed herein broadly, is to operate the artifact reduction system ARS on "dual" input data: on the one hand the input data includes as one input data item the imagery obtained V by the imaging apparatus IA, such as an interventional imaging apparatus, in a current, on-going, imaging session, and, a second data item on the other hand, that represents additional information V0, in particular, reference information in respect of the object of interest. Such dual data input (*V, V0*) allows for better, that is, quicker and more robust, correction for motion image artifacts that may be caused by patient motion, in particularly by motion the object of interest OI. This reference information V0 may for example be a pre-operative image V0 in respect of the object of interest. Alternatively, the reference information is a "post"-operative image V0. Thus, the additional reference information, referred herein more broadly as the "reference image V0", can be obtained prior, or after, the current imaging session by the interventional imaging apparatus IA for the current image V of the object of interest.

The reference image V0 may be obtained by a second imaging modality IA0, different from the currently used C-arm imager IA. For example, the second imaging modality IA0 may be a CT scanner. Thus, whilst the current imaging apparatus (or "target" imaging apparatus) IA operable during the current imaging session may be of the interventional type, such as the C-arm type as shown, the "reference" imaging apparatus IA0, for as such it may be referred to herein, may be a diagnostic imaging apparatus. For example, the said CT scanner IA0 may be used, with the familiar doughnut shaped gantry.

It is in general understood herein that the reference imagery V0 processable by the artifact reduction system ARS for the purpose of reducing motion artifacts in the currently obtained imagery V, suffers from no motion artifacts or, if it does, such motion artifacts are less pronounced/less severe than the motion artifacts in the currently obtained imagery V. Severity or a level of image artifact degradation can be measured by suitable metrics that may be computed off the distribution of image values that make up the imagery V, V0. Such metrics may take feature(s) of image structures into account. Statistical metrics may be used. For example, image structure entropy may be used.

In more detail, the reference image V0, or the reference data V0 more generally, may be a pre-operative CT volumetric image of the object of interest OI, or of another object/region that includes a surrogate structure SS, the purpose of which will be become apparent shortly. Such reference image V0 may be acquired prior to the current imaging session of interventional imager IA. Thus, the reference imager IA0 may be operable to acquire the reference image V0 in a prior imaging session, prior to the current imaging session of imager IA for the current image V. The reference image V0 may be placed in storage, and this can be retrieved for example from a PAC database system or other, and can be used for present motion correction purposes by the artifact reduction system ARS. The artifact reduction system ARS may include suitable interfacing and retrieval capability, such as an API (application program interface), to effect such retrieval of reference image V0. Thus, in such a scenario, reference imagery V0 was obtained prior to the patient PAT assuming a position in the examination room on a patient support PS for the purpose of the current imaging session by imaging apparatus IA. However, variations of such reference image are also envisaged, where the reference image is actually acquired after the current session has concluded with the target (eg, interventional) imaging apparatus IA. Thus, the patient can leave the target imaging apparatus IA, proceed to a different examination room for example, or to a different part of the current examination room, to be imaged there by the reference imaging apparatus IA for the reference image IA0.

However, as an alternative to the above, in some cases it may be possible to use the very same imaging equipment, such as the target imaging apparatus IA, to acquire the reference imagery V0 prior or after the current imaging session for the purpose of obtaining the current image V of interest as needed. However, using a different imaging modality such as a CT scanner as indicated in Fig. 1 for the reference imager IA0 is preferred. For example, the reference imaging apparatus may be capable of a faster image acquisition than the interventional imaging apparatus IA. This reduces the chances for motion artifacts to be incurred. Thus, the reference image V0 may include, in relation to the object of interest, or to its surrogate structure SS, fewer artifacts, or artifacts of lesser severity, such as, ideally, no motion artifacts at all, as compared to the motion artifact corrupted image V. Processing, by artifact reduction system ARS, both, the currently acquired imagery V0, and the reference imagery V0 together as proposed herein allows for improved motion correction as will be explained in more detail below.

As said, one application scenario is head imaging of the skull which may be done for therapy or diagnosis. For example, the patient may need to be examined for the presence of a brain tumor, for the presence of stroke, have their sinuses examined, or may be examined for foreign bodies, or for placement of certain implants or for other image-guided procedures, or other applications still. In such image guided procedures, the projection data acquisition for current image *V* may be on-going, whilst the intervention is performed. However, the present disclosure is not necessarily confined to such image-guided imaging procedures, and can be used instead to support other imaging settings. In addition, the present approach is not confined to X-ray-based imaging at all. Other modalities such as MRI, nuclear imaging, ultrasound, etc, are not excluded herein. So long as two imaging modalities are used, or a single modality is used in different modes, that allows providing two categories of imagery *V, V0* in relation to the same object of interest but compromised to a different degree with motion artifacts, such imagery V, V0 can be processed according to the principles described herein. "Mixed modality" embodiments are also envisaged, where the current imaging for current image V is with one modality, such as X-ray based (C-arm, etc), whilst the modality of the reference image V0 is with another modality altogether, such as with an MRI or other.

However, in such mixed modality embodiments, the imagery V,V0 is assumed herein to be relatable to each other, such as by a contrast transfer function that maps across the different contrast conferring mechanisms at play in the different imaging modalities. Thus, the contrast transfer function may be configured to map an MRI reading at a given voxel to a corresponding HU/attenuation value for CT or C-arm imaging, or vice versa, as needed.

The artifacts reduction system ARS may be fully or partly integrated into the imaging apparatus IA. The artifact reduction system ARS may be arranged in hardware and/or software as needed. For example, the artifact reduction system ARS may be included into a workstation associated with the imaging apparatus. In other embodiments, the artifact reduction system ARS is included at least in part into the data acquisition system of the imager's X-ray detector XD, as needed. However, whilst such a "close-to-the-data-source" arrangement is preferred, it is not a necessity herein. Indeed, parts or the whole of the artifact reduction system ARS can be arranged in a cloud setting. For example, some or all of the functionalities or components of the artifact reduction system ARS may be carried out by one or more servers arranged remotely for the imaging apparatus. Distributing computing, e.g. with load balancing, may be used to allow the artifact reduction system to serve multiple imagers, such as in medical facility, large GP practices or clinics, research facilities, etc, as needed. Having said that, edge computing principles may be used herein with benefit, according to which at least some of the data processing components of artifact reduction system ARS are indeed arranged in closer geographical proximity than others to data source, that is, to the imaging apparatus itself.

Application of the artifact reduction system ARS is envisaged in particular for patient head motion correction, but it may be used instead also for imaging of other body parts, such as imaging of the limbs, or other.

Before providing more in-depth details of the operation of the artifact reduction system ARS, continued reference is first made to Fig. 1 in order to explain certain components of the tomographic imaging apparatus IA in mor detail (some of such explanations may also apply to the reference imager IA0), thereby facilitating the later, more detailed, explanations in connection with the artifact reduction system ARS.

The target imager IA is configured for multi-directional (indicated schematically in the Fig as "α") projection data acquisition around the ROI, IO. A acquisition trajectory, or "scan", may not necessarily define a complete 360° angular range, but 180°, or even less, may be sufficient herein. The acquisition trajectory may not necessarily define a circular arc, although in some most case this may be so, as other geometries are also envisaged.

The imaging apparatus IA includes an X-ray source XS and an X-ray sensitive detector XD. In some embodiments, the X-ray source XS, and opposite thereto, the X-ray sensitive detector XD, are arranged preferably on the rotatable gantry G. The imaging apparatus IA may be of the rotational type in some embodiments to effect the multi-directional projection data acquisition along the trajectory. Such a rotational imaging apparatus allows collection of projection imagery $\lambda$ along different projection directions $P(\alpha)$ in the said scan trajectory around the region of interest (ROI), such as around the object of interest OI, eg, aspects of patient's head in head or brain imaging.

A bi-planar imaging setup with two detectors with intersecting imaging axes (for example at right angles) is not excluded herein. Cone-beam imaging or other divergent beam geometries are mainly envisaged herein. Thus, the imager IA is preferably a tomographic cone beam C-arm, but other setups are not excluded herein.

Soft tissue, such as the one making up blood vessels, provide usually poor contrast in native X-ray imagery. In order to boost contrast, a contrast agent (sometimes "CA" or short), such as an iodine solution, gadolinium, or other, may be delivered through an access point AP into the blood flow of the patient prior to or during imaging. The contrast agent may be delivered via a CA delivery apparatus DA, such as a motorized pump, but manual delivery is not excluded herein. However, not all imaging protocols call for such contrast agent, and use of such contrast agent is optional herein.

The reconstructed imagery V may be visualized by a visualizer VIZ as a live video feed on display device DD. Alternatively or in addition, still imagery is so visualized.

In addition, whilst digital-at-source imaging, such as flat panel detectors is preferred, where projection data $\lambda$ is natively acquired as digital data, such a setup is not necessarily required. More traditional, cassette-operable, analog imaging methods (based on X-ray films) are not excluded herein. The analog imagery may be digitized post-acquisition for example, by using a digital camera or scanner. Imaging based on X-ray image intensifiers, etc, with post-digitization is also envisaged in some embodiments.

Turning now to the imaging/acquisition in more detail, this includes energizing the X-ray source XS, so that an X-ray beam XB issues forth from a focal spot of the source XS, traverses the examination region (with the region of interest/ ROI/object of interest ROI in it), and interacts with patient tissue matter. Interaction of X-ray beam XB with tissue matter causes the X-ray beam to be modified. The modified beam may then be detected at the detector XD. Conversion circuitry (not shown) converts detected intensities into digital imagery, in particular into the said projection imagery $\lambda$. During acquisition, the patient PAT may reside on a patient support PS, such as a table or patient couch. The portion 3D space between source XS and detector XD where object of interest OI, ROI resides forms the examination region ER. During acquisition, the source XS, and in particular the detector XD, orbit around the object of interest OI in the examination region, along the trajectory to acquire the projection data $\lambda$ from different spatial positions/directions on the trajectory.

Turning now in more detail to the reconstruction operation, the tomographic reconstructor RECON processes acquired projection data $\lambda$ into the tomographic/volumetric imagery $R(\lambda)=V$.

In general, reconstruction algorithms of reconstructor RECON implement a mapping R (back projection) that maps projection imagery $\lambda$ located in projection domain $\Pi$ into image domain $M$, R: $\Pi$ -> $M$. Image domain is a portion of 3D space and is located in the examination region ER of the imaging apparatus, whilst the projection domain is in another 3D space, defined by the 2D detector and an angular dimension (the projection direction), and is located at the (X-ray) detector XD of the imaging apparatus IA. The image domain (examination region ER) is conceptually made up of 3D grid points (voxels). The reconstruction algorithm, be it of the FBP (filtered back-projection)-, algebraic- or iterative-type, populates the voxels with image values (such as HU values) to so build up the image V. Patient Motion during acquisition compromises operation of the reconstructor by causing the mentioned inconsistencies. Pixels may end up being mapped to the wrong voxel positions, thus leading to the mentioned motion artifacts. Reconstructor RECON may process the acquired projection data $\lambda$ on the assumption of a known acquisition trajectory. Motion during acquisition may compromise this assumption. Conceptually, and as will be used herein, there is also another mapping associable with R, or as a standalone operator, which is a forward projection $\pi$ that maps from image domain M into projection domain $\Pi$, $\pi$: $M$ -> $\Pi$.

The mutual spatial relationship, or spatial configuration, between the imaged patient PAT (and thus, by extension, the object of interest or surrogate structure SS) and the source XS and/or detector XS may be referred to herein as imaging geometry. The imaging geometry may be adjusted by user through operator console CS through suitable control interfacing and circuitry. The imaging geometry may change as the projection data acquisition unfolds. Such adjustment may also be effected automatically by specifying the desired imaging protocol. One or more actuators (not shown) of imaging apparatus IA may be operable to effect the imaging geometry or adjustments thereto.

The imaging geometry may be parameterized by parameter(s). A parameter of the imaging geometry may include, as schematically shown in Fig. 1, rotation of arm GT, and hence of source XS and detector XD, around an axis, such as the example axis shown in Fig. 1, running parallel to the drawing plane of Fig. 1. Imaging geometry may also, or instead, include rotation around the other one or both spatial axes. Imaging geometry parameter may further include a tilting of the detector, the distance between source and detector, the distance between source and patient (which may be realized by adjusting height over ground of patient support PS), etc. For simplicity, the imaging geometry may be denoted herein synecdochically as angle "$\alpha$". Thus, a full specification of imaging geometry may usually require different plural parameters $\alpha = (\alpha_1, ..., \alpha_j, ..., \alpha_N)$, either set by user through operator console or other, or may be set by protocol automatically. The imaging geometry $\alpha$ determines the imaging/acquisition trajectory s(a) traced out by the source XS and detector XD around the patient PAT during acquisition of the projection data. Thus, the projection data $\lambda$ so acquired is a function of trajectory and hence of imaging geometry:-

$$\lambda = \lambda(s) = \lambda[s(\alpha)] \qquad\qquad (1)$$

The trajectory can be described by the imaging geometry parameters, or by co-ordinates in respect of the examination region ER. Thus, a position of the X-ray detector on the trajectory, and thus for the frames of the projection imagery $\lambda$ acquired in projection domain, are associated with different positions of space along the trajectory.

The trajectory is usually chosen by the operator, the medical user, of the imaging apparatus. The trajectory may be prescribed by protocol for the particular medical task at hand. Thus, the acquisition trajectory may be a function of the medical task to be accomplished and/or of the anatomy of interest OI, or the region of interest more generally.

Taking the above into account, the projection data may thus be understood conceptually as a data structure that is made of two data sets: in-image information, that is pixel data *(x,y)*, and, in addition, and separate therefrom, spatial trajectory information s. Thus projection data for target imagery $V(\lambda)$ reconstructable therefrom, may be written formally as $\lambda = ((x,y),s) = \lambda_s$. Pixel data *(x,y)* are the intensities recorded as entries at different rows x and columns y for 2D projection data mainly envisaged herein. The pixel data *(x,y)* is recorded in response to exposure to the X-ray beam, whilst the spatial trajectory information encodes where in 3D space the respective projection data frame $\lambda = ((x,y),s)$, having the pixels *(x,y)*, was recorded. Thus, in the imager IA setup of Fig. 1, trajectory information would correspond to the detector's XD position on the trajectory s.

The above described in terms of imaging geometry, trajectory or projection data being a function of the imaging geometry/trajectory used, is also applicable to the reference imager IA0, such as the CT scanner, or other similar modality. It may be noted however, that not all tomographic imaging modalities, such as those of at least 4th generation CT, or MRI, PE, etc, have an explicit mechanical/kinematic acquisition trajectory in terms of rotating component such as detector and/or source, etc, as described above. In some such modalities they may be no, or fewer, or different types of motion (such as rotation), or rather states, that are not necessarily definable in terms of a motion trajectory. Thus, the term "acquisition trajectory", and related concepts, may be expressed differently in terms of different parts of data acquisition facilitating machine equipment, such as in terms of position of detector pixels on a detector annulus arranged around the imaged object, or in terms of pulse sequences or RF coil activation patterns such as in MRI. Thus, the term "(acquisition) trajectory" is to be construed broadly herein, to refer to any arrangement or functional relationship between acquired data (from which the tomographic imagery is reconstructable) and states of operation of data acquisition facilitating machine equipment of the tomographic imager. Such states may or may not include such trajectories. The continued referred herein to trajectories in aiding explanation of the artifact reducer system ARS has exemplary character, and does not exclude application of the principles disclosed herein, to other acquisition setups.

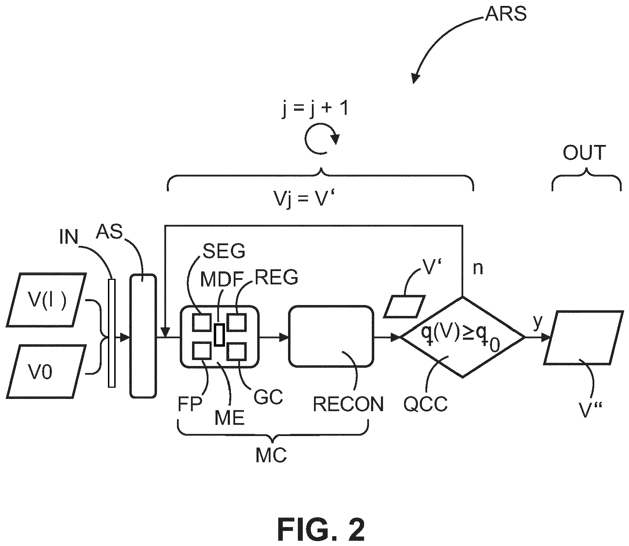

Reference is now made to the block diagram of Fig. 2, which shows more details of the artifact reduction system ARS. Broadly, the artifact reduction system ARS may be based on image segmentation and image registration. To this effect, a motion correction component MC of the artifact reduction system ARS may include a motion estimator ME. The motion estimator ME may include, or may be capable to interface with, a segmentor SEG, and a registration component REG, capable of performing a segmentation algorithm and a spatial registration algorithm, respectively, and to be used in a manner to be now described in more detail. In general, any suitable segmentation algorithm such as snakes (active contour segmentation), thresholding, region growing, ML (machine learning) based, MBS (model-based segmentation) may be used. The segmentation is done in image domain on the current image V (referred to herein as the target image V), and preferably also on the reference image V0. The segmentation is for object of interest or for the surrogate structure SS which include, or is included in, the object of interest OI, or may be spatially different therefrom. The spatial registration is preferably of the 3D type and thus operable in image domain. The registration algorithm may be of the rigid or elastic type. The spatial registration allows capturing a definition of the motion which marred the image quality in the current target image.

In connection with the above described components and concepts, the forward projection operator $\pi()$ may be used by artifact reduction system ARS, as will be described shortly below. As mentioned earlier, the forward projection operator $\pi()$ transforms data from image domain to projection domain.

Broadly, the artifact reduction system ARS may include, or may be capable of interfacing with, the (or a different) reconstructor RECON. Based on data produced by the segmenter SEG and registration unit REG, the artifact reduction system ARS may request a further reconstruction, in which the motion artifact reduced image V'' may be obtained.

Turning now first briefly to the concept of the surrogate structure SS, this is a structure, such as part of an anatomical structure, that also underwent motion just like the actual object of interest did. However, in some cases it may be easier to segment for the surrogate structure SS instead for the object of interest, and use the motion of the segmented surrogate structure to define the motion that the object of interest experienced. The motion of the surrogate structure may be the same as that experienced by the object of interest, or at least there is a pre-defined, a priori known, or estimatable, relationship between the motion of the object of interest and the motion of the surrogate structure. Thus, once the motion of the surrogate structure is known as may be found by the registration, so is the motion of the object of interest. The so found motion estimation information may then be accounted for the by the further reconstruction to obtain the motion artifact reduced image V'.

Interaction of the said components of artifact reduction system ARS is now explained in more detail.

Operation

When in use, at an input interface IN of artifact reduction system ARS, the reference V0 and the current target image V reconstructed on a currently acquired projection set $\lambda$ is received. The reference image V0 may also be pre-loaded and installed in memory accessible by the artifact reduction system ARS.

An optional assessor component AS assesses at first whether the currently obtained target image V actually does suffer from motion artifacts. One or more of certain statistical metrics, such as image structure entropy based, or other, may be used to compute, from image values of target V, the said quality metric. The metric is configured to vary with the amount of motion artifacts present in the imagery. If no such motion artifact(s) are found, the artifact reduction system does not enter into processing workflow, and may be bypassed. Thus, the target imagery V can be immediately used for its purpose as is. If, however, the assessor AS finds that there are artifact(s) that affect the object of interest/ROI, the motion corrector module MC of artifact reduction system ARS comes into play.

In embodiments, this module MC may include the segmentor SEG to segment the reference image VO, and the current target image V, for the surrogate structure SS, or for the object of interest OI. The surrogate structure SS may or more not be part of the object of interest OI.

In yet more detail, the current input image $V$ was reconstructed based on the currently measured projection data $\lambda$, which may have been acquired whilst there was patient motion. The current input image $V$ may be assumed to be motion artifact corrupted, and is such that it affects in particular image quality (IQ) of the object of interest OI/ROI. The reference image V0 on the other hand, has been, or will be acquired, on a different set of reference projection data $\lambda0'$, which is thought to be less affected, or not affected at all, by such motion artifacts. Thus, the input into the artifact reduction system are the (at least) two images $V, V0$ from image domain.

In some embodiments, in a first step, the said segmentation by segmentor SEG is carried out for the surrogate structure or the object of interest directly. In either case, the result of the operation of segmentor SEG are is a set of two segmentations g=(gv, gvo), one gv of the target image, and one for the reference image $g_V$. The segmentations are respective (sub)sets of image values (voxels) of 3D image domain that have been found to represent the surrogate structure or the object of interest in the two images *V,V0.*

The registration component REG then applies a spatial 3D image registration operation to the two sets of images V, V0, to align same according to the same image co-ordinate system in 3D (in image domain). As a variant, the registration may be done before the segmentation. However, preferably the segmentation is done first, and the registration may then be based on the two segmented structures, that are known to correspond to each other.

Then a forward projection is carried out by a forward projector FP across either one the so segmented and registered volumes V,V0, preferably along the same projection directions used to acquire the projection data $\lambda$ for the current input imagery V. This forward projection operation results in one of the following two sets of "synthesized" (as opposed to actually measured) projection data $\pi(g_V) \subset V) := \pi g_V$, or $\pi(g_{V0}) \subset V0) := \pi g_{V0}$, respectively. Thus, operational processing now moves from image domain into the projection domain. Set $\pi g_V$ may be referred to herein as the forward projected "*target projection data*", and set $\pi g_{V0}$ may be referred to herein as the forward projected "*reference projection data*".

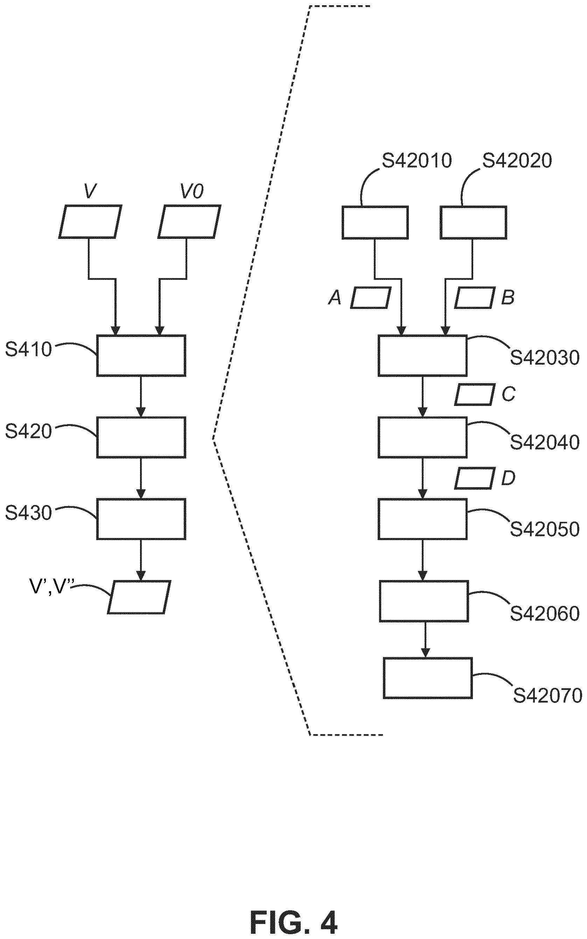

Optionally, before so forward projecting, the respective segmented and registered volume is modified by image modifier MDF to enhance definition of image structures for better structural definition. This may aid in accelerating the processing, in particular the (new) reconstruction of the motion artifact reduced image *V"*. Sharper definion of the forward projected data may be benefit of such enhancement. More details of operation of image modifier MDF will be provided below in connection with flow chart Fig. 4.

With continued reference to Fig. 2, motion estimator ME of the motion corrector component MC then processes one of two sets of projection data $\pi g_V$, $\pi g_{V0}$, each now including data representing certain protectional aspects of the surrogate structure SS or of object of interest OI/ROI. For computational and/or memory efficiency, it may be considered expedient to restrict forward projection to a small (tight) image neighborhood *U(g)* around the respective segmentations in *V,V0,* rather than forward projection across the whole volumes, although the latter is not excluded herein.

Specifically, and with continued reference to the motion estimator ME, the projection data $\pi g_V$ or $\pi g_{V0}$ forward-projected across the input image *V* may appear in the common ("world") co-ordinate system (now projected into projection domain) as off-set from the originally measured projection data $\lambda$. Thus, as an example, the forward projected projection data $ng_V$ or $\pi g_{V0}$ may appear shifted and/or rotated, or even deformed, depending on the circumstances, as compared to the forward projected reference projection data.

Thanks to operation of registration component REG, a geometry corrector GC of motion estimator ME may compare one of the two forward projected data sets with the projection data $\lambda$, now in alignment in the common co-ordinate system, to obtain motion information. This motion information (also referred to herein as "motion model") represents an estimate of the motion experienced by the object of interest or surrogate structure. A motion conversion may be needed if the motion information so found is that of the surrogate structure. The conversion may be based on a pre-defined known functional relationship between motion of object of interest /ROI and its surrogate structure SS.

Thus, the geometry corrector GC may compare the target projection data or the reference projection data, to the initial, actually measured, projection data $\lambda$. Preferably, the reference projection data $\pi g_{V0}$ may be used to compare against the measured, projection data $\lambda$, but using target projection data $\pi g_V$ instead is not excluded in some alternative embodiments. In some embodiments, both forward projected sets $\pi g_{V0}$, $\pi g_V$ are used for comparison with $\lambda$ to obtain two instances of said motion information. An averaging, or other forms of computational combining operation, may be used, for better robustness, to obtain the motion information based on the two instances of said motion information.

In yet more detail, this motion information may be a vector field for example that describes what changes need to be done in order to bring the two data sets ($\pi g_{V0}$ or $\pi g_V$ vs $\lambda$) into alignment. One or more control points may be used at which the vectors of the vector field are evaluated and are then used to update the currently acquired projection data $\lambda$ into updated correction data $\lambda'$.

The updating may include applying an off-set $\vec{m}'$ to the target projection data $\lambda$. Thus, the updating may be any one, or more of, shifting, rotating or deforming of data $\pi g(V)$, into alignment with the reference data $\pi g(V0)$, in a given, common, world co-ordinate system. In some cases, only a shift (translation) may be used as such offset. In some embodiments, this updating may be considered equivalent to changing the imaging geometry, and hence the trajectory information s of the target projection data $\lambda$. For example, in a rigid motion of the object OI, SS, this may be translated to a "virtual" distortion of the acquisition trajectory s. Using this concept, "motion-correction" may be realized by applying the motion model to the trajectory, instead of modifying the reconstruction grid during reconstruction. There are mainly two advantages of using "virtual" acquisition trajectories to correct rigid motion: Low implementation effort, if the reconstruction algorithm can handle arbitrary trajectories and fewer interpolations and hence sharper images.

Thus, in sum, motion-correction MC module is operable to compare the trajectory of the forward projection $\pi g_{V0}$ (or $\pi g_V$), with the trajectory of the actually measured projection $\lambda$. The motion is estimated by updating or modifying the geometrical parameters of the forward projection $\pi$. The motion parameters are translated for some or every projection frame into a "virtual trajectory", which is then used in a final step to reconstruct the motion-corrected volume. For non-rigid motion, this concept of "virtual trajectory", is more involved, as this may include a further step of deforming, "warping", the 3D volume during reconstruction.

The so repositioned projection data $\lambda'$, now in the new virtual trajectory, but preferably otherwise identical to the acquired target projection data $\lambda$, is then passed to the reconstructor RECON for a second-pass reconstruction in order to obtain improved (artifact reduced) imagery V'. In this reconstruction, the new updated trajectory s' is now used instead of the old trajectory information s. The updated trajectory s' may be obtained by motion corrector MC, in particular the geometry corrector GC, in applying the motion information to the old trajectory information: $s' = s \oplus \vec{m}' := m(s)$. In here, $\vec{m}'$ indicates the estimate of the patient motion $\vec{m}$, as obtained based on the registration result, and "$\oplus$" is a general operator whose nature depends on the alignment operations needed. Thus, "$\oplus$" operator may indicate a shift, rotation, deformation, or any one, two, or all of the aforesaid, based on specific circumstance of the case at hand. "$\oplus$" may be a simple vector addition using the vector field revealed by the registration or it may be matrix or tensor operation. Quaternions may be used in some instances. The new, second pass reconstructed image V' may suffer from fewer or less severe motion artifacts than the input imagery V did. Thus, referring back to (1) above, the geometry corrector GC may fashion the updated projection data $\lambda'$, based in the registration results, by modifying only the tractor data s of $\lambda$, or by modifying both, trajectory s and pixel data (x,y). The latter may be the case in particular when elastic registration is used, although rigid registration may be sufficient in most cases. Thus, in rigid registration, only updating of the trajectory information s may be needed, whilst the pixel data remained unchanged. As to the surrogate structure SS in head imaging, parts or whole of the lower jaw (mandible) has been found to be useful when object of interest includes the brain or the bone structures, such as the parietal that encloses the brain.

A quality checker QCC may then use the same, or a different, quality metric q() as used by the assessor AS, to check for the presence of motion artifacts, if any, that still remain. The check may be formulated as one against a benchmark value q0. Instead of having such a quality checker QCC, the initial assessor AS may be called up again, or revisited, for such as an output check. If the currently motion corrected volume V' passes the quality check, it is then output as the final image V", which can then be displayed on the display device DD, or may be stored, or otherwise processed as needed for the current imaging session by imaging apparatus IA. If, however, it is found that there are still motion artifacts as per quality metric q, the above procedure can be repeated in one or more iterations as indicated in the top part of Fig. 2 as "j=j+1". However, in the next iteration, j +1, it is now the currently improved image V' that is used, in place of the j initial reference set V0. Alternatively, it is still the original reference data set V0 that is maintained remains, but now using in place of the original image V, the improved image V'.

Thus, the artifact reduction system ARS may proceed in two loops of iterations: one for the reconstruction operation itself, and one in respect of the quality checker QCC, as measure by metric q. An artifact reduction iteration includes motion estimation, reconstruction, and optional assessment for vestiges of artifacts remaining. Motion estimation is preferably based on bone segmentation from the previous reconstruction (or original image V in the first iteration). Starting with a good bone segmentation reduces the total number of artifact reduction iterations and improves the quality of the final image V". Instead of bone, any other high contrast structure may be used instead.

Some or all of the above-described components of the artifact reduction system ARS, such as the geometry corrector GC, or other parts of the motion corrector MC, may be included in reconstructor RECON. Thus, such reconstructors are "motion/geometry" aware. The motion estimator ME provides an updated trajectory, which may be conceptualized as a motion model, and this is then taken into account during reconstruction by reconstructor. The proposed setup can be used with any tomographic reconstruction algorithm, such as *Defrise-Clack*'s filtered-back-projection (FBP), iterative, algebraic, or any other such tomographic reconstruction algorithm that are imaging geometry/trajectory aware. Thus, in such reconstruction algorithm being so aware, parameter(s) for the trajectory used for the acquisition data $\lambda$ are processed by the reconstruction algorithm, either explicitly or implicitly.

Optionally, the forward projector FP may be part of the reconstructor RECON, in particular when the latter is of the iterative type, in which the forward projector FP may be used for a different purpose as described herein, namely for facilitating the iterative reconstructor operation R (as mentioned above in connection with Fig. 1) as implemented by reconstructor RECON. Thus, in such or similar embodiments, the artifact reduction system ARS may include suitable APIs or other interfacing capabilities to place a function call for the forward projector FP as part of the reconstructor, to be used for present motion artifact reconstruction purposes, as described herein.

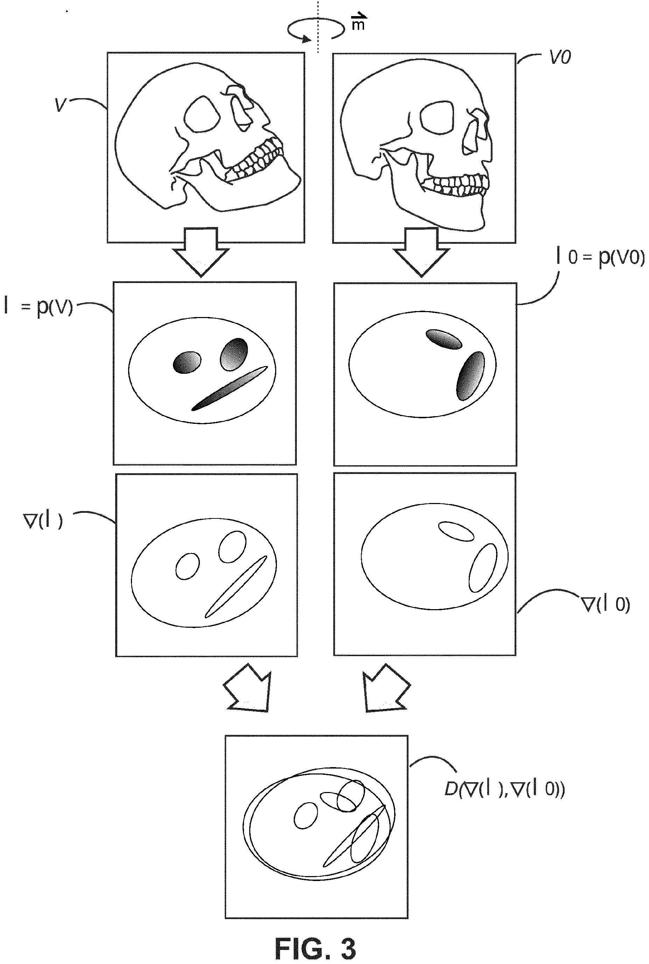

Reference is now made to Fig. 3 which shows in more detail some of the data processed and generated as described above in connection with Fig. 2. For example, for enhanced processing, the forward projected data may be filtered, such as by forming the gradients $\nabla$ in the reference projection data $\lambda'$ and the target projection data. The forward projected data, after registration and possibly filtered, may then be compared to establish the offset or motion information estimate $\vec{m}'$. The bottom row of Fig. 3 illustrates the spatial discrepancy between the two data sets, based on a distance measure D(), such as Euclidean distance, possibly squared, or other. For example, the distance may be evaluated by multiplying the gradient strengths of two sets of imagery, which is higher if image structures in the said imagery overlap. As mentioned earlier, $\pi$ indicates in Fig. 3 the forward projection applied to the target image V after segmentation for the surrogate structure, or for the object of interest. Optionally, the same projection operation can also be applied to the reference image V0 after segmentation.

Reference is now made to Fig. 4 which shows a flow chart of a computer implemented method that may be used to implement the above motion artifact reduction system ARS. However, it should be noted that the below described steps of the method are not necessarily tied to the architecture above, and can also be interpreted instead as a teaching in its own right.

Broadly, at step S410, input data is received, including a currently obtained target image $V$ of a patient, reconstructed from currently measured projection data $\lambda$, and a reference image $V0,$ reconstructed from reference projection data set $\lambda0$, of the same patient. This "dual" input data is processed at step S420 to reduced, eg remove, motion artifacts in the current target volume V. The motion artifact may be due to motion of patient during imaging for the target image V.

The motion correction operation S420 results in a new image V" with improved image quality (less or fewer motion artifacts than the input image V). The new image V" may then be provided at step S430, instead of, or in addition to, the current target image V. For example, the new motion artifact reduced image $V$" can be processed, displayed, etc, for the current ongoing image session in respect of image $V,$ etc. Thus, the motion corrected imagery V" may be used to better inform a current, for example interventional, imaging session for therapy or diagnosis, or other purposes, as needed. The described principles herein are not necessarily confined to diagnosis and/or therapy, or indeed to the medical field in particular, but can also be used for other medical purposes, or in non-medical fields, wherever motion artifacts are a concern and need to be reduced, compensated or entirely removed, as the case may be.

The motion correction operation S420 is now described in more detail, with reference to the "sub-flow chart", to the right of Fig. 4. Thus, the below steps may be understood as "sub-steps" of the motion correction operation S420 step. The current (target) image V is assumed herein to be motion artifact corrupted, at least respect of the object of interest/ROI, whilst there is no, or less, such motion artifact corruption in respect of reference image $V0.$

At step S42010, the reconstructed reference volume V0 is segmented to obtain segmentation data for the surrogate structure SS or for the object of interest itself. This segmentation result may be referred to herein as data $A$.

Any segmentation tool can be used, such as a tool for skull and/or brain segmentation. Optionally, earlier extant segmentation results may be retrieved from data storage such as from a PACS system. Optionally, skull segmentation from cameras or surface sensing technology and bone prediction based on atlases, deep learning, or other machine learning methods may be used.

In addition, or instead, a similar segmentation for the surrogate structure or object of interest is done in step S42020, but now based on the target image data V, referred to herein as data B. Again, the same or a different segmentation method as in step S42010 can be used here.

For example, in either or both segmentation steps S42010, S42020, HU thresholding and/or morphological operators may be used. In some embodiments, the segmentations of $A$ and $B$ may be done by minimizing the Hausdorff distance between the two segmentations. Any 3D registration method may be used, such as the "FEIR" volume registering framework, as proposed by S Kabus and C Lorenz in "Fast elastic image registration. Medical Image Analysis for the Clinic: A Grand Challenge ", vol 89, pp 81-89 (2010).

Segmentation data $A = gv \subset V$ and $B= gv0 \subset V0$ provide dual segmentation, reference segmentation data $A$ being in addition to reference segmentation data B for the target image, thus providing more robust and reliable processing.

For example, in head imaging, segmentations $A$ and $B$ may relate to the skull and/or mandible, or to bone tissue more generally. In the following we will be referring for definiteness to such bone segmentations $A, B$ in relation to the skull/mandible, but this is exemplary and not limiting. Thus, application of the principles described herein to segmentations for other tissues and anatomies are also envisaged herein.

At step S42030, a spatial 3D registration is carried out of the two input volumes $V, V0$ to obtain registration data C. This registration causes in particular registration of the subsets $A \subset V$ with respect to $B \subset V0,$ or registration of subset $B \subset V0$ with respect to $A \subset V.$

The segmentation S42010, S42020 and registration S42030 may be done in any order, but doing the segmentation S42010, S42020 first, and then the registration S42030 may be preferred herein. In an optional modification step S42040, as may be implemented by modifier MDF (see Fig. 3) or other, one of the 3D registered segmentations, A or B, is modified. Preferably, registered data B is modified, but modifying instead registered data A is not excluded herein. Thus, modification step may be operable in image domain.

For example, in some embodiments, the modifier or resetter step S42040 may use registration data C to modify segmentation B (eg, a bone segmentation) to obtain the said modified segmentation $D$. Modified segmentation $D$ may be obtained by setting some or every voxel value in D, where C indicates bone, to a fixed bone value, e.g. 0.04 [1/mm]. Optionally, some or every voxel value in D, where C indicates bone, is set to the corresponding attenuation value of A. In case of reference $V0$ was obtained by a different modality than target volume V (for example, such as by an MR imager, in which case reference volume V0 is an MR volume), a corresponding transfer of, say, MR contrast to X-ray attenuation values, may be performed. Optionally, some or every voxel in D, where C is not bone, is set to a fixed soft tissue value, e.g. 0.02 [1/mm]. Optionally, a combination of the above voxel setting options above are envisaged. As a further voxel setting option, some or every voxel in D, where C indicates bone, is set to the value of B.

A rationale for the optional modifier/resetter step S42040 is to use, at a given registered bone (or other material of interest for the case at hand) voxel position, a bespoke, modified "bone voxel value", which better corresponds to the actual imaging conditions, than the corresponding value of the prior/reference volume V0. Thus, an objective is to e able to use, eg, the shape (spatial) information from the prior/reference volume *V0,* but use e.g. attenuation values for the *"bone voxel"* from the current volume, despite the motion-artifacts. The reference volume *V0* may have been acquired with different spectra or even a different modality, such as a MR, and hence the attenuation values may be adjusted to better match the current imaging setup for current volume V. Thus, this resetter step allows better importing the information from the reference image *V0.*

Either one of the registered segmentations *A, B* (optionally modified into data *D*) is then forward projected by forward projection operation π into projection domain in step S42050. Preferably registered segmentation data *B* (possibly modified) is so forward projected.

Updated trajectory information s' is then determined at step S42060 based on comparing the (modified) forward projected segmentation with the target projection data.

Specifically, at step S42060, based on correction information derivable in particular from the registration and the comparison in projection domain between the forward projected data from step S42050 and the measured data λ, the acquired projection data λ is transformed into a new co-ordinate system as if it was acquired in a different acquisition trajectory s', also referred to above as the virtual trajectory. Thus, this step S42060 may be conceptualized as a definition of a motion model or motion information. The trajectory information s (see (1) above) in the projection data λ may be changed, whilst the in-image pixel data *(x,y)* may be maintained. The correction information in form of a new trajectory may be used in the new reconstruction step to reconstruct for new virtual trajectory, to so compensate for the motion experienced by the object of interest OI as recorded in the current projection data λ. For example, a motion, eg rotation of the patient's head, by, say, "*5° to the right",* may be compensated for by rotating the relevant projection frame by the same amount and direction, thus defining the new, virtual, trajectory s'.

If elastic registration was used in step S42030, it is also the pixel information that may be changed in step S42060.

At step S42070, based on the new motion model, in particular on the new trajectory s', the projection data λ is reconstructed anew, to obtain the improved motion reduced image V'.

The above steps may be repeated in one or more iterations until sufficient motion artifact reduction is established. For this, as mentioned, entropy, or other statistical measures, can be used. As an additional "gate-keeper "step, the above method may be entirely by-passed if it is found that the initial target image *V* is in fact not compromised by motion artifacts. The above method may be applied per overtime frame basis, if the input imagery is a stream of data (video).

At a further step (not shown) the so motion corrected image can then be used for the intended purpose such as therapy, image guided therapy or diagnosis, etc, as needed. In the further step, the motion corrected image *V"* may be displayed, may be used for other control purposes, or may be otherwise processed, as needed.

Different imaging modalities may be used for the current image *V,* and for the reference image as needed, however, both can be carried out by the same such as an interventional X-ray imaging apparatus or other as needed. For example, the patient may be sedated in order to achieve an improved data set with less motion artifacts so the same imaging set-up can be used. Thus, the proposed set-up does not necessarily for the two imaging modalities. As long as reference data is available that is actually known to include fewer or no motion artifacts. Both the reference data and the current data V preferably refer to the same object of interest in particular the same patient. In some cases however it may be sufficient if the reference data pertains to another patient with sufficiently physical anatomical characteristics such as sex, age, BMI, etc, as needed. However, this may be less preferred in certain embodiments. In addition, it may be sufficient for the reference data to pertain to the surrogate structure as such. Imaging of the object of interest OI in and of itself may not be needed, as the surrogate information from the surrogate structure SS can be used in the object of interest OI's stead, to effect motion correction in *V.*

As may be appreciated by those schooled in the image processing art, the processing of the imager V, V0 and/or of the related projection data is not confined to the spatial domain. Thus, the data as proposed herein may be transformed into frequency domain, at least at times, may be filtered, or otherwise signal processed to facilitate the artifact reduction processing as disclosed herein.

The method could also be used for other anatomical sites, e.g. body extremities, spinal cord.

In some cases, using the bone segmentation of a follow-up CT can be useful. E.g., when the patient left the table before (relevant) motion artifacts were detected or for improved analysis after the intervention.

When multiple scans are acquired within the same intervention (e.g. pre- and posttreatment), the reference bone segmentation can be taken from the image with the least motion artifacts, as may be established by using suitable metrics such as image structure entropy or others.

In some embodiments, the reference image may be based on spectral imaging, such as when a dual energy imager is used, such as of the cone beam CT type. A "bone only" image may be obtained using a material decomposition algorithm, such as proposed by Alvarez et al. In this example, the very same imager IA can be used for obtaining both, the target image V and the reference image V0. Because spectral imaging allows for material specific imaging, such as for bone or whatever the material of interest, with, in the case of bone, contributions from other hyperdense materials reduced or entirely eliminated. This allows for yet better segmentation, with fewer errors, increasing performance of the proposed setup overall.

The components of the motion artifact reduction system ARS may be implemented as one or more software modules, run on one or more general-purpose processing units, such as a workstation associated with the imager IA, or on a server computer associated with a group of imagers.

Alternatively, some or all components of the motion artifact reduction system ARS may be arranged in hardware such as a suitably programmed microcontroller or microprocessor, such an FPGA (field-programmable-gate-array) or as a hardwired IC chip, an application specific integrated circuitry (ASIC), integrated into the imaging system IA. In a further embodiment still, the motion artifact reduction system ARS may be implemented in both, partly in software and partly in hardware.

The different components (see Fig. 2 above) of the motion artifact reduction system ARS or the steps of the related method (Fig. 4) may be implemented on a single computing unit. Alternatively, some or more components are implemented on different computing units, possibly remotely arranged in a distributed architecture and connectable in a suitable communication network such as in a cloud setting or client-server setup, etc.

One or more features described herein can be configured or implemented as or with circuitry encoded within a computer-readable medium, and/or combinations thereof. Circuitry may include discrete and/or integrated circuitry, a system-on-a-chip (SoC), and combinations thereof, a machine, a computer system, a processor and memory, a computer program.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (in particular, but not necessarily, a non-transitory medium), such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. An image processing system (ARS), comprising:-

   input interface (IN) for receiving a reconstructed current target image ($V$) of an object of interest (OI) subjectable to motion,
   a motion corrector (MC) configured to correct for motion artifact in the target image causable by said motion, based on information as per a reconstructed reference image ($V0$) of the object, the said reference image ($V0$) including motion artifact, if any, to a lesser extent than the current target image ($V$).

2. The system of claim 1, wherein the said information is based on a segmentation of the reference image for a surrogate structure or for the object of interest (OI).

3. The system of claim 2, wherein the said information is further based on such segmentation of the current target image.

4. The system of any one of claims 2-3, wherein the said information is based on a spatial registration of the two images, the current target image and the reference image, in respect of the segmentations for the motion surrogate structure (SS) or of the object of interest (OI).

5. The system of any one of the preceding claims, wherein the motion surrogate structure or the object of interest includes bone tissue.

6. The system of any one of the preceding claims, wherein the target image (V) is obtainable by an interventional tomographic imaging apparatus (IA).

7. The system of any one of the preceding claims, wherein the reference image (V0) is obtained by a further ($IA_0$) or the same imaging apparatus.

8. The system of any one of the preceding claims, wherein at least one of the interventional imaging apparatus and/or the further imaging apparatus is/are X-ray based.

9. The system of claim 8, wherein the interventional imaging apparatus (IA) is a cone-beam C-arm tomographic scanner, and/or wherein the further imaging apparatus is a computed tomography scanner, CT or a cone-beam C-arm tomographic scanner.

10. System of any one of the preceding claims, wherein the correcting for the motion artifact by the motion corrector (MC) includes computing a corrected image ($V'$) in a further reconstruction, based on d projection data for a different acquisition trajectory than the one used to acquire the projection data from which reference image is reconstructable.

11. System of any one of the preceding claims, wherein the different acquisition trajectory is based on comparing the projection data for the current image, with projection data obtainable by forward projection of the segmented reference image or of a segmented current image.

12. An imaging arrangement (MIA), including any one or more of: i) the system of any one of the preceding claims, ii) a reconstructor (RECON), iii) a display device (DD) on which any or more of the a) current image, b) the reference image and c) the artifact corrected image *(V', V)* is displayable, iv) a segmentor SEG, v) an image registration component (REG), vi) one or more imaging apparatus (IA, $IA_0$) for obtaining at least one of the current image ($V$), and the reference image ($V0$).

13. Method of image processing system, comprising:
    receiving (S410) a reconstructed current target image ($V$) of an object of interest (OI) subjectable to motion, and
    correcting (S420) for motion artifact in the target image causable by said motion, based on information as per a reconstructed reference image ($V0$) of the object, the said reference image ($V0$) including motion artifact, if any, to a lesser extent than the current target image ($V$).

14. A computer program element, which, when being executed by at least one processing unit, is adapted to cause the processing unit to perform the method as claim 13.

15. At least one computer readable medium having stored thereon the program element of claim 14.

**FIG. 1**

**FIG. 2**

$V$

$V0$

$\vec{m}$

$I = p(V)$

$I_0 = p(V0)$

$\nabla(I)$

$\nabla(I_0)$

$D(\nabla(I), \nabla(I_0))$

**FIG. 3**

S42010    S42020

V    V0

A

B

S410

S42030

C

S420

S42040

D

S430

S42050

V', V''

S42060

S42070

**FIG. 4**

Europäisches Patentamt

European Patent Office

Office européen des brevets

# EUROPEAN SEARCH REPORT

**Application Number**

EP 24 16 6724

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ISOLA ALFONSO ET AL: "Fully automatic nonrigid registration-based local motion estimation for motion-corrected iterative cardiac CT reconstruction", MEDICAL PHYSICS, AIP, MELVILLE, NY, US, vol. 37, no. 3, 16 February 2010 (2010-02-16), pages 1093-1109, XP012135628, ISSN: 0094-2405, DOI: 10.1118/1.3301600 | 1-10, 12-15 | INV. G06T11/00 |
| A | * the whole document * | 11 | |
| A | VERNIKOUSKAYA INA ET AL: "3D-XGuide: open-source X-ray navigation guidance system", INTERNATIONAL JOURNAL OF COMPUTER ASSISTED RADIOLOGY AND SURGERY, vol. 16, no. 1, 15 October 2020 (2020-10-15), pages 53-63, XP037344305, ISSN: 1861-6410, DOI: 10.1007/S11548-020-02274-0 * the whole document * | 1-15 | |

TECHNICAL FIELDS SEARCHED (IPC)

G06T

The present search report has been drawn up for all claims

| Place of search | Date of completion of the search | Examiner |
|---|---|---|
| Munich | 26 August 2024 | Werling, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NICOLE M CANCELLIERE et al.** Motion artifact correction for cone beam CT stroke imaging: a prospective series. *J. NeuroIntervent. Surg*, 2022, 6

- **S KABUS** ; **C LORENZ**. *Fast elastic image registration. Medical Image Analysis for the Clinic: A Grand Challenge*, 2010, vol. 89, 81-89